# EUROPÄISCHE PATENTSCHRIFT

(11) **EP 4 008 917 B1**
(45) Veröffentlichungstag und Bekanntmachung des Hinweises auf die Patenterteilung: **09.10.2024**
(21) Anmeldenummer: 21205864.8
(22) Anmeldetag: 02.11.2021
(51) Int. Cl.: F16B 13/12

(54) **SPREIZDÜBEL**
EXPANSION ANCHOR
CHEVILLE À EXPANSION

(30) Priorität: 20.11.2020 DE 102020130796
(43) Veröffentlichungstag der Anmeldung: 08.06.2022
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-A1- 3 175 131
- EP-A1- 3 587 836
- EP-A2- 2 119 920
- WO-A1-2014/075776
- DE-A1- 102013 107 075
- FR-A1- 3 027 639

## Beschreibung

Die Erfindung betrifft einen Spreizdübel mit den Merkmalen des Oberbegriffs des Anspruchs 1.

Aus der Offenlegungsschrift DE 10 2011 000 537 A1 sind gattungsgemäße Spreizdübel bekannt. Die bekannten Spreizdübel umfassen jeweils zwei Dübelhülsen, die aus unterschiedlichen Kunststoffkomponenten hergestellt sind. Eine der Dübelhülsen weist zwei Spreizschenkel auf, die durch aufweitbare Verbinder miteinander verbunden sind. Die Verbinder sind V-förmig oder gerade, schräg verlaufende Rippen, die in Längsrichtung voneinander beabstandet sind, sodass zwischen ihnen Volumen entstehen, die durch die Kunststoffkomponente der anderen Dübelhülse gefüllt werden, was durch das zusätzliche Material zwischen den Verbindern den Spreizdruck gegen die Wand eines Bohrlochs in einem Vollbaustoff, wie beispielsweise Beton, erhöht und dadurch große Haltekräfte ermöglicht.

Ein weiterer Spreizdübel ist aus der DE 10 2013 107075 A1 bekannt.

Aufgabe der Erfindung ist es, einen Spreizdübel zu schaffen, der universell einsetzbar ist und sowohl in einem Vollbaustoff, wie beispielsweise Beton, als auch in Hohlbaustoffen, wie beispielsweise Gipskartonplatten oder Lochziegel, eine zuverlässige Verankerung mit hoher Haltekraft ermöglicht.

Diese Aufgabe wird erfindungsgemäß durch einen Spreizdübel mit den Merkmalen des Anspruchs 1 gelöst. Der erfindungsgemäße Spreizdübel umfasst eine erste Dübelhülse und eine zweite Dübelhülse. Die beiden Dübelhülsen erstrecken sich gemeinsam in Längsrichtung um einen Spreizkanal, in den zum planmäßigen Aufspreizen des Spreizdübels ein Spreizelement, beispielsweise eine Schraube oder ein Nagel, einführbar ist. Die beiden Dübelhülsen bestehen insbesondere aus unterschiedlichen Kunststoffen, die sich beispielsweise hinsichtlich ihrer Farben und/oder Härten unterscheiden. So kann beispielsweise eine der Dübelhülsen aus Polyamid und die andere Dübelhülse aus Polypropylen hergestellt sein. Insbesondere ist der Spreizdübel im Zweikomponentenspritzgussverfahren aus zwei unterschiedlichen Kunststoffen hergestellt. Die beiden Dübelhülsen sind derart angeordnet, dass die erste Dübelhülse die zweite Dübelhülse zumindest teilweise umschließt, insbesondere in einem vorderen und/oder einem hinteren hülsenartigen Abschnitt des Spreizdübels in Umfangsrichtung. "Umschließen" meint hier nicht nur ein vollflächiges Abdecken der innen liegenden zweiten Dübelhülse durch das Material der ersten Dübelhülse, die erste Dübelhülse kann beispielsweise auch Durchbrechungen aufweisen, durch die Teile der zweiten Dübelhülse durch die erste Dübelhülse sichtbar sind und/oder nach außen durchtreten können. Somit liegt die zweite Spreizhülse zumindest lokal innerhalb der ersten Spreizhülse. "Vorne" und "hinten" beziehen sich hier und nachfolgend auf die Richtung, in der der Spreizdübel planmäßig in ein Bohrloch eingebracht wird. Dabei wird das vordere Ende des Spreizdübels zuerst in das Bohrloch eingeführt. Insbesondere sind die beiden Dübelhülsen zumindest lokal, insbesondere in dem vorderen und/oder dem hinteren Abschnitt axial und/oder drehfest miteinander verbunden, insbesondere formschlüssig, insbesondere mittels einer Nut-Zapfen-Verbindung als Formschlusselement.

Zur Verankerung in einem Bohrloch weist die erste Dübelhülse mindestens zwei Spreizschenkel auf. Die Spreizschenkel erstrecken sich insbesondere in Längsrichtung parallel zum Spreizkanal und sind insbesondere an ihrem vorderen und/oder hinterem Ende an einem hülsenartigen Abschnitt gelagert und durch diesen miteinander verbunden. Die beiden Spreizschenkel sind durch mindestens einen aufweitbaren Verbinder miteinander verbunden, derart, dass die Spreizschenkel beim Einbringen des Spreizelements voneinander weg bewegbar sind, sodass der Spreizdübel im Bereich der Spreizschenkel aufspreizt, also seinen Durchmesser vergrößert. Das Aufspreizen erfolgt insbesondere radial zur Längsachse des Spreizdübels, die parallel zum, insbesondere mittig im, Spreizkanal verläuft. Mit "Durchmesser" ist hier der Durchmesser eines der beiden Spreizschenkel umschreibenden Zylinders gemeint, der rotationssymmetrisch zur Längsachse des Spreizdübels ist. "Aufweitbar" meint, dass der Verbinder beim Aufspreizen seine Länge in Umfangsrichtung vergrößern kann, beispielsweise durch eine Formänderung und oder durch eine Materialdehnung. Insbesondere ist der Verbinder in einem unverspreizten Zustand schräggestellt und/oder U- oder V-förmig, wie dies aus dem Stand der Technik bekannt ist. Insbesondere ist er aus dem Material der ersten Dübelhülse und mit dieser einstückig hergestellt.

Erfindungsgemäß ist an dem Verbinder ein an den Verbinder angrenzender Freiraum ausgebildet. Mit "Freiraum" ist ein Volumen gemeint, das sich in Längs- und in Umfangsrichtung erstreckt und in dem kein oder nur wenig Material von einer der oder von beiden Dübelhülsen angeordnet ist, derart, dass der Verbinder sich beim Verspreizen des Spreizdübels in den Freiraum hinein bewegen kann, also beim Verspreizen in den Freiraum hinein bewegbar ist. Die Bewegung des Verbinders erfolgt beim Aufspreizen insbesondere in Längsrichtung, insbesondere zudem radial nach außen. Insbesondere weist die erste Dübelhülse eine an den Verbinder grenzende Öffnung als Freiraum auf, die die Wand der ersten Dübelhülse in radialer Richtung vollständig durchdringt, was bedeutet, dass der Freiraum die gleiche radiale Ausdehnung aufweist, wie der an den jeweiligen Freiraum angrenzenden Verbinder. Alternativ kann die Öffnung im Bewegungsbereich des Verbinders nur durch eine dünne Spritzhaut, deren Wandstärke maximal 10 %, insbesondere maximal 5 % der Wandstärke des Verbinders beträgt, ganz oder teilweise verschlossen sein.

Die erfindungsgemäße Ausbildung des Spreizdübels hat den Vorteil, dass die Beweglichkeit des Verbinders nicht durch Material der ersten oder der zweiten Dübelhülse erschwert oder negativ beeinflusst wird. Die beiden Spreizschenkel der ersten Dübelhülse können dadurch in einem Baustoff, beispielsweise im Bereich hinter einer Gipskartonplatte, ungehindert aufspreizen, sodass das Spreizverhalten und damit die Tragfähigkeit des Spreizdübels gegenüber den aus dem Stand der Technik bekannten Spreizdübeln verbessert ist.

Insbesondere wird der Freiraum in radialer Richtung zur Längsachse hin zumindest teilweise durch die zweite Dübelhülse begrenzt.

Vorzugsweise wird der Freiraum in Längsrichtung durch den Verbinder begrenzt. Das heißt, dass eine den Freiraum bildende Öffnung direkt an den Verbinder grenzt, der die Öffnung in Längsrichtung zu einer Seite begrenzt. Die dem Verbinder gegenüberliegende Seite der Öffnung ist durch Material der ersten und/oder der zweiten Dübelhülse begrenzt. Der Verbinder kann sich aufgrund dieser speziellen Ausbildung beim Aufspreizen frei in das Volumen hinein bewegen, das im unverspreizten Zustand den Freiraum beziehungsweise die Öffnung bildet, ohne dass der Verbinder durch Material, das zwischen dem Verbinder und der Öffnung angeordnet wäre, behindert wird.

Vorzugsweise befindet sich im Freiraum kein Material der zweiten Dübelhülse, das heißt, dass der gesamte Freiraum über die gesamte Wandstärke der ersten Dübelhülse frei vom Material der zweiten Dübelhülse ist. Die Höhe des Freiraums entspricht somit der Wandstärke des Verbinders und der anderen Teile der ersten Dübelhülse, die den Freiraum in Längs- und Umfangsrichtung begrenzen.

Weiterhin ist bevorzugt, dass mindestens zwei Verbinder in Längsrichtung hintereinander angeordnet sind, derart, dass zumindest zwischen dem ersten Verbinder und dem zweiten Verbinder der Freiraum ausgebildet ist. Insbesondere begrenzen die beiden Verbinder den Freiraum in Längsrichtung.

Vorzugsweise sind mindestens drei Verbinder in Längsrichtung hintereinander angeordnet, derart, dass zumindest zwischen dem ersten Verbinder und dem zweiten Verbinder ein erster Freiraum ausgebildet ist.

Weiterhin ist bevorzugt, dass der Spreizdübel mindestens zwei Verbinder aufweist und dass eine in Längsrichtung zwischen den Verbindern angeordnete Durchdringung mit dem Material der zweiten Dübelhülse zumindest teilweise gefüllt ist. Dieses Material der zweiten Dübelhülse bildet vorzugsweise einen Spreizschenkel der zweiten Dübelhülse aus, der beim Einbringen des Spreizelements in den Spreizkanal durch die erste Dübelhülse hindurch ebenfalls nach außen aufspreizbar ist.

Damit sich der Spreizschenkel der zweiten Dübelhülse in einem Vollbaustoff gut an die Wand des Bohrlochs anpassen oder bei einem Hohlraum leicht ausknicken und/oder verknoten kann, weist der Spreizschenkel vorzugsweise lokale Schwächungen, insbesondere in Form von Nuten auf, die insbesondere in Umfangsrichtung verlaufen und als Sollknick- und/oder Sollbiegestellen wirken. Insbesondere sind die lokalen Schwächungen in Längsrichtung hintereinander angeordnet, insbesondere als zueinander parallel verlaufende Nuten.

Damit das Aufspreizen des Spreizschenkels der zweiten Dübelhülse das Aufspreizen der Spreizschenkel der ersten Dübelhülse nicht behindert, ist auf der der Durchdringung abgewandten Seite und/oder auf der der Durchdringung zugewandten Seite eines jeden der die Durchdringung begrenzenden Verbinders ein Freiraum angeordnet, derart, dass die Verbinder sich in Längsrichtung beim Verspreizen in die Freiräume bewegen können, wodurch die zweiten Spreizschenkel beim Aufspreizen eine verbesserte Beweglichkeit aufweisen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind ebenfalls möglich.

Die Erfindung wird nachfolgend anhand eines Ausführungsbeispiels näher erläutert.

Es zeigen:
- Figur 1: einen ersten erfindungsgemäßen Spreizdübel in einer perspektivischen Ansicht;
- Figur 2: eine zweite Dübelhülse des erfindungsgemäßen Spreizdübels in einer perspektivischen Ansicht;
- Figur 3: einen Querschnitt durch den ersten Spreizdübel in der Ebene III der Figur 1 in einer perspektivischen Ansicht; und
- Figur 4: einen Längsschnitt durch den erfindungsgemäßen Spreizdübel in der Ebene IV der Figur 1.

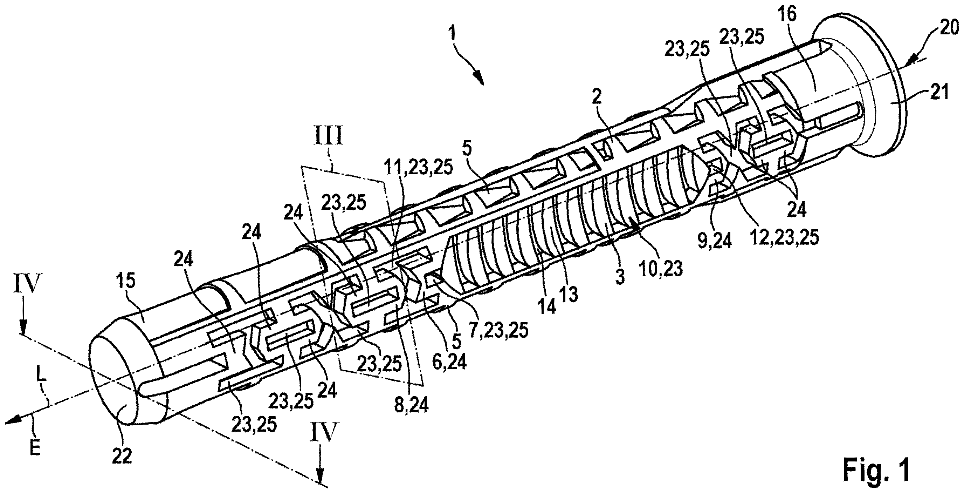

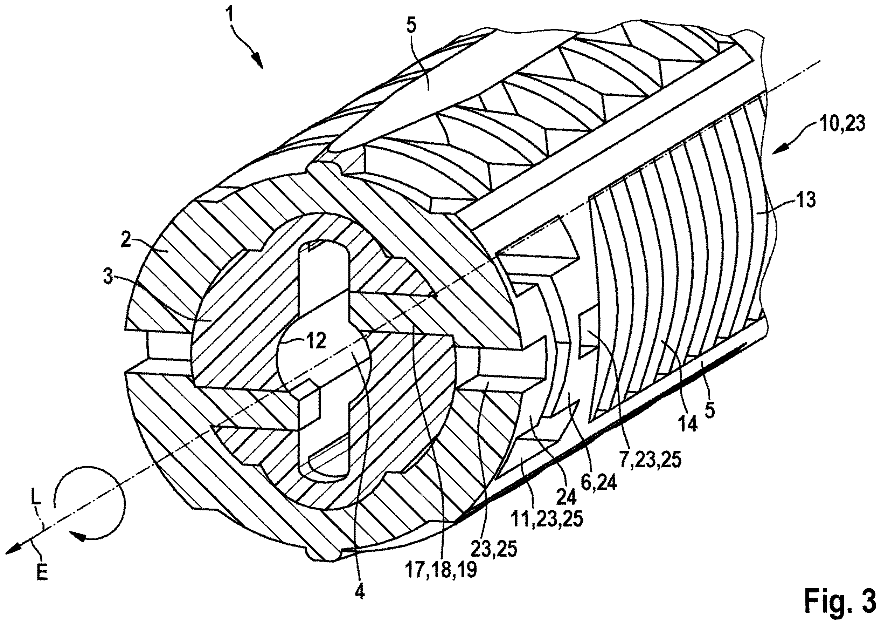

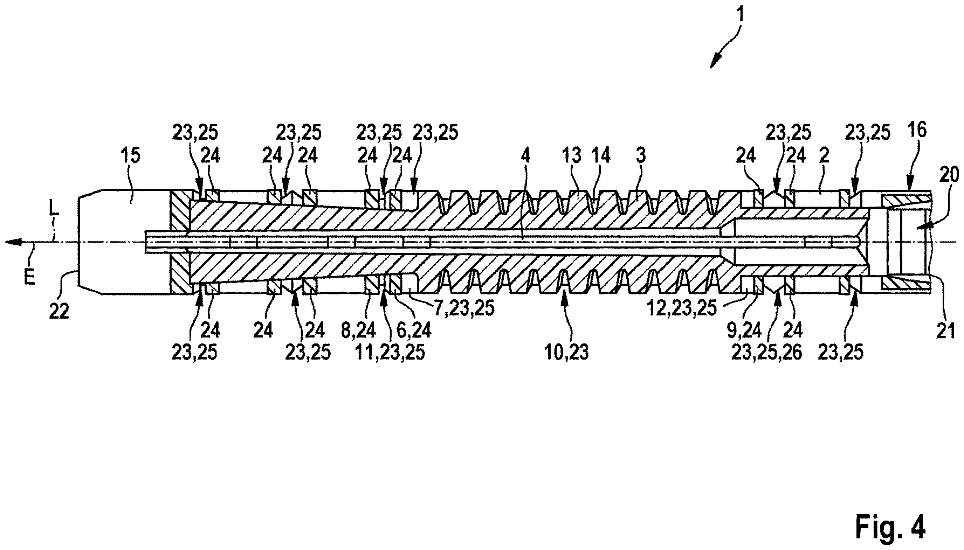

In Figur 1 ist ein erster erfindungsgemäßer Spreizdübel 1 dargestellt. Der erfindungsgemäße Spreizdübel 1 besteht aus einer ersten Dübelhülse 2 und einer zweiten Dübelhülse 3. Die beiden Dübelhülsen 2, 3 erstrecken sich gemeinsam in Längsrichtung, also entlang der Längsachse L des Spreizdübels 1. Dabei umschließen die Dübelhülsen 2, 3 einen Spreizkanal 4, der in den Figuren 3 und 4 zu sehen ist. In den Spreizkanal 4 kann ein Spreizelement, beispielsweise eine Schraube oder ein Nagel (nicht dargestellt), zum Aufspreizen des Spreizdübels 1 durch eine Einführöffnung 20 am hinteren Ende 21 des Spreizdübels 1 eingeführt werden. Das hintere Ende 21 des Spreizdübels 1 liegt, bezogen auf die Längsachse L, dem vorderen Ende 22 des Spreizdübels 1 gegenüber. Das vordere Ende 22 ist das Ende, mit dem voran der Spreizdübel 1 planmäßig in ein Bohrloch in einem Verankerungsgrund (beides nicht dargestellt) in Einführrichtung E eingebracht wird.

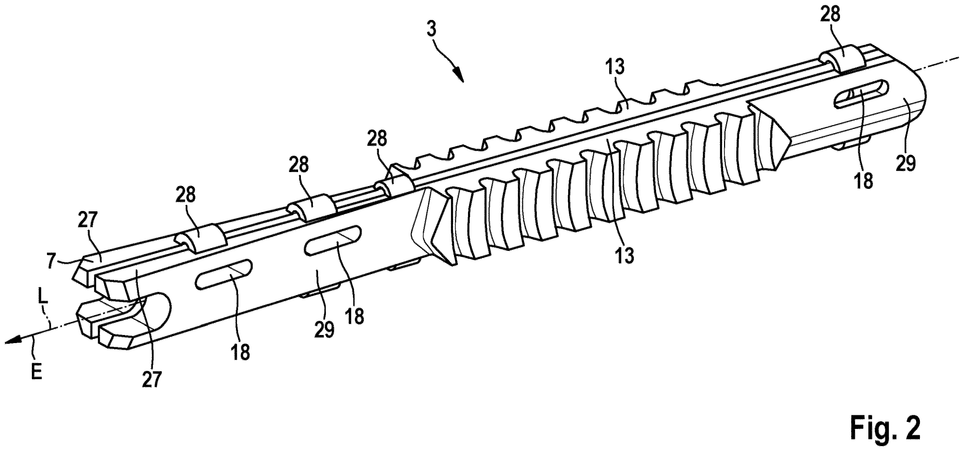

Im Ausführungsbeispiel der Figuren 1 bis 4 bildet die erste Dübelhülse 2 eine äußere Hülse, die die in Figur 2 allein dargestellte zweite Dübelhülse 3 umschließt, wobei mehrere Öffnungen 23 vorgesehen sind, die die erste Dübelhülse 2 vollständig durchdringen, derart, dass die zweite Dübelhülse 3 von außen sichtbar ist und zumindest in Teilbereichen die erste Dübelhülse 2 durchdringt. In den Figuren sind beispielhaft mehrere der Öffnungen 23 der ersten Dübelhülse 2 mit Bezugszeichen versehen, aus Gründen der Übersichtlichkeit allerdings nicht alle.

Die erste Dübelhülse 2 umfasst einen hülsenartigen vorderen Abschnitt 15, der das vordere Ende 22 des Spreizdübels 1 bildet, sowie einen hülsenartigen hinteren Abschnitt 16, der das hintere Ende 21 des Spreizdübels 1 bildet. Zwischen diesen beiden Abschnitten 15, 16 weist die erste Dübelhülse 2 zwei Spreizschenkel 5 auf, die einstückig mit den beiden hülsenartigen Abschnitten 15, 16 aus Polypropylen durch Spritzgießen hergestellt sind. Die beiden Spreizschenkel 5 sind durch mehrere aufweitbare Verbinder 24 miteinander verbunden, die U-förmig ausgebildet sind, sodass sie beim Aufspreizen, also dann, wenn ein Spreizelement in den Spreizkanal 4 eingebracht wird, durch eine Formänderung in Richtung der Umfangsrichtung aufweitbar sind. Das bedeutet, dass sich beim Aufspreizen die Verbindungsstellen der Verbinder 24 mit den Spreizschenkeln 5 voneinander wegbewegen, wobei die Verbinder 24 sich verformen und in Umfangsrichtung längen. Teilweise bilden zwei der U-förmigen Verbinder 24 gemeinsam eine O-förmige Verbindung zwischen den beiden Spreizschenkeln 5 aus. Um das Spreizverhalten des Spreizdübels 1 zu verbessern, sind an den Verbindern 24 Freiräume 25 ausgebildet, die an die Verbinder 24 angrenzen. So grenzt an einen ersten Verbinder 6 ein erster Freiraum 7 sowie ein zweiter Freiraum 11 an. Dabei begrenzt der erste Verbinder 6 die beiden Freiräume 7, 11 in Längsrichtung, wobei der zweite Freiraum 11 in Längsrichtung zudem durch einen zweiten Verbinder 8 begrenzt ist. Die Freiräume 25 sind über ihr komplettes Volumen frei vom Material der ersten Dübelhülse 2 und der zweiten Dübelhülse 3, so dass beim Aufspreizen des Spreizdübels 1 die sich die beim Aufweiten verformenden Verbinder 24 in die Volumen, die die Verbinder 24 im nicht aufgespreizten Zustand einnehmen, ungehindert hinein bewegen können. Die radiale Ausdehnung des Volumens der Freiräume 25 entspricht der Materialdicke der ersten Spreizhülse 2 in dem jeweiligen an einen der Freiräume 25 angrenzenden Bereich, das heißt, dass ein Freiraum 25 die erste Dübelhülse 2 in radialer Richtung vollständig durchdringt und die gleiche radiale Ausdehnung aufweist, wie der an den jeweiligen Freiraum 25 angrenzende Verbinder 24. Wie in Figur 3 zu sehen ist, kann die zweite Dübelhülse 3 die Freiräume 25 in radialer Richtung nach innen hin begrenzen.

Angrenzend an den ersten Verbinder 6 und den ersten Freiraum 7 weist die erste Dübelhülse 2 eine lang gestreckte Öffnung 23 auf, die als Durchdringung 10 mit dem Material der zweiten Dübelhülse 3 gefüllt ist. Dieses Material der zweiten Dübelhülse 3, das die Durchdringung 10 im Ausführungsbeispiel aufgrund von nutartigen Schwächungen 14 nur teilweise ausfüllt, bildet einen Spreizschenkel 13 der zweiten Dübelhülse 3, wie dies unten näher erläutert wird. Damit die Spreizschenkel 13 der zweiten Dübelhülse 3 das Aufspreizen der Spreizschenkel 5 des ersten Dübelhülse 2 nicht behindern, ist auf der der Durchdringung 10 zugewandten Seite des ersten Verbinders 6, wie auch auf der der Durchdringung 10 abgewandten Seite des ersten Verbinders 6 jeweils ein Freiraum 25 angeordnet, nämlich hier der erste Freiraum 7 und der zweite Freiraum 11. Die Durchdringung 10 wird auf ihrer dem ersten Verbinder 6 abgewandten Seite durch einen weiteren Verbinder 24 begrenzt, nämlich durch den dritten Verbinder 9, an den der dritte Freiraum 12 sowie ein vierter Freiraum 26 angrenzt.

Die zweite Dübelhülse 3 ist in Figur 2 allein dargestellt. Sie besteht aus zwei Grundkörpern 27, die durch bügelartige Verbindungselemente 28 an ihren Endabschnitten 29 miteinander verbunden sind. Zwischen den beiden Endabschnitten 29 sind zwei Spreizschenkel 13 der zweiten Dübelhülse 3 angeordnet, die jeweils für sich und unabhängig voneinander einstückig mit den Endabschnitten 29 verbunden sind. Die zweite Dübelhülse 3 ist ebenfalls einstückig im Spritzgießverfahren hergestellt, im Ausführungsbeispiel aus Polyamid. Im Regelfall wird die zweite Dübelhülse 3 zeitlich vor der ersten Dübelhülse 2 gespritzt und dann im Mehrkomponentenspritzgießverfahren mit dem Material, das die erste Dübelhülse 2 bildet, umspritzt, so dass die zweite Dübelhülse 3 von der ersten Dübelhülse 2 umgeben ist.

Die Endabschnitte 29 der zweiten Dübelhülse 3 weisen Nuten 18 auf, die beim Umspritzen der innen liegenden zweiten Dübelhülse 3 bei der Herstellung des Spreizdübels 1 im Mehrkomponentenspritzgießverfahren durch das Material, das die erste Dübelhülse 2 bildet, mit Zapfen 19 aufgefüllt werden, die einstückige Bestandteile der ersten Dübelhülse 2 sind. Die Nuten 18 bilden mit den Zapfen 19 Formschlusselemente 17, durch die die erste Dübelhülse 2 im Bereich ihres vorderen Abschnitts 15 und ihres hinteren Abschnitts 16 dreh- und axialfest mit der zweiten Dübelhülse 3 verbunden ist.

Dagegen sind die Spreizschenkel 5 der ersten Dübelhülse 2 und die Spreizschenkel 13 der zweiten Dübelhülse 3 nicht miteinander verbunden, so dass diese frei zueinander und unabhängig voneinander bewegbar sind, wodurch sich die Spreizschenkel 5, 13 in einem Bohrloch optimal an die Geometrie der Bohrlochwand anpassen können. Um die Beweglichkeit der zweiten Spreizschenkel 13 und somit ihre Fähigkeit zur Anpassung an eine Bohrlochwand und oder zum Ausknicken beziehungsweise zum Verknoten in einem Hohlraum eines Lochbaustoffs zu verbessern, weisen die zweiten Spreizschenkel 13 mehrere nutartige Schwächungen 14 auf, die in Umfangsrichtung verlaufen und in Längsrichtung hintereinander angeordnet sind. Die Schwächungen 14 reduzieren die Dicke der Spreizschenkel 13 in radialer Richtung lokal und bilden Sollbiege- und/oder Sollknickstellen aus.

Durch die Ausbildung der Freiräume 25, und insbesondere durch die Kombination mit den Schwächungen 14, wird ein Spreizdübel 1 geschaffen, der universell einsetzbar ist und der sich sowohl in Vollbaustoffen an die Geometrie der Bohrlochwand als auch in Hohlbaustoffen an die Form eines Hohlraums optimal anpassen kann. Durch die Freiräume 25 wird der erfindungsgemäße Spreizdübel 1 in sich so beweglich, dass der Spreizdübel 1 seine Geometrie jeweils sehr gut an die jeweilige Befestigungssituation anpassen kann, was für einen optimalen Halt des Spreizdübels 1 im Verankerungsgrund und somit für die sichere Befestigung eines nicht dargestellten, zu befestigenden Gegenstands sorgt.

### Bezugszeichenliste

- 1: Spreizdübel
- 2: erste Dübelhülse
- 3: zweite Dübelhülse
- 4: Spreizkanal
- 5: Spreizschenkel der ersten Dübelhülse 2
- 6: erster Verbinder
- 7: erster Freiraum
- 8: zweiter Verbinder
- 9: dritter Verbinder
- 10: Durchdringung
- 11: zweiter Freiraum
- 12: dritter Freiraum
- 13: Spreizschenkel der zweiten Dübelhülse 3
- 14: Schwächung
- 15: hülsenartiger vorderer Abschnitt der ersten Dübelhülse 2
- 16: hülsenartiger hinterer Abschnitt der ersten Dübelhülse 2
- 17: Formschlusselement
- 18: Nut
- 19: Zapfen
- 20: Einführöffnung
- 21: hinteres Ende des Spreizdübels 1
- 22: vorderes Ende des Spreizdübels 1
- 23: Öffnung der ersten Dübelhülse 2
- 24: aufweitbarer Verbinder
- 25: Freiraum
- 26: vierter Freiraum
- 27: Grundkörper der zweiten Dübelhülse 3
- 28: bügelartiges Verbindungselement der zweiten Dübelhülse 3
- 29: Endabschnitt der zweiten Dübelhülse 3

- E: Einführrichtung
- L: Längsachse

## Patentansprüche

1. Spreizdübel (1) mit einer ersten Dübelhülse (2) und mit einer zweiten Dübelhülse (3), die sich gemeinsam um einen Spreizkanal (4) in Längsrichtung (L) erstrecken,
wobei in den Spreizkanal (4) zum Aufspreizen des Spreizdübels (1) ein Spreizelement in Längsrichtung einführbar ist,
wobei die erste Dübelhülse (2) die zweite Dübelhülse (3) zumindest teilweise umschließt,
und wobei die erste Dübelhülse (2) mindestens zwei Spreizschenkel (5) aufweist, die durch mindestens einen aufweitbaren Verbinder (24) miteinander derart verbunden sind, dass die Spreizschenkel (5) beim Einbringen des Spreizelements voneinander wegbewegbar sind,
wobei an dem Verbinder (24) ein an den Verbinder (24) angrenzender Freiraum (25) ausgebildet ist, wobei eine in Längsrichtung zwischen zwei Verbindern (6, 9) angeordnete Durchdringung (10) mit dem Material der zweiten Dübelhülse (3) gefüllt ist, **dadurch gekennzeichnet, dass** das Material der zweiten Dübelhülse (3), mit dem die Durchdringung (10) gefüllt ist, einen Spreizschenkel (13) der zweiten Dübelhülse (3) bildet.

2. Spreizdübel nach Anspruch 1, **dadurch gekennzeichnet, dass** der Freiraum (25) in Längsrichtung durch den Verbinder (24) begrenzt ist.

3. Spreizdübel nach einem der vorstehenden Ansprüche, **dadurch gekennzeichnet, dass** der Freiraum (25) frei von Material der zweiten Dübelhülse (3) ist.

4. Spreizdübel nach einem der vorstehenden Ansprüche, **dadurch gekennzeichnet, dass** mindestens zwei Verbinder (6, 8) in Längsrichtung hintereinander angeordnet sind, derart, dass zumindest zwischen dem ersten Verbinder (6) und dem zweiten Verbinder (8) ein Freiraum (11) ausgebildet ist.

5. Spreizdübel nach Anspruch 4, **dadurch gekennzeichnet, dass** mindestens drei Verbinder (6, 8, 9) in Längsrichtung hintereinander angeordnet sind, derart, dass zumindest zwischen dem ersten Verbinder (6) und dem zweiten Verbinder (8) der erste Freiraum (7) ausgebildet ist.

6. Spreizdübel nach einem der vorherigen Ansprüche, **dadurch gekennzeichnet, dass** auf der der Durchdringung (10) abgewandten Seite jedes Verbinders (6, 9) ein Freiraum (11, 26) angeordnet ist.

7. Spreizdübel nach einem der vorherigen Ansprüche, **dadurch gekennzeichnet, dass** auf der der Durchdringung (10) zugewandten Seite jedes Verbinders (6, 9) ein Freiraum (7, 12) angeordnet ist.

8. Spreizdübel nach einem der vorherigen Ansprüche, **dadurch gekennzeichnet, dass** der Spreizschenkel (13) lokale Schwächungen (14) aufweist.

## Claims

1. An expansion anchor (1) having a first dowel sleeve (2) and having a second dowel sleeve (3), which together extend around an expansion channel (4) in the longitudinal direction (L), wherein an expansion element can be inserted in the longitudinal direction into the expansion channel (4) for expanding the expansion anchor (1),
wherein the first dowel sleeve (2) at least partially encloses the second dowel sleeve (3),
and wherein the first dowel sleeve (2) has at least two expansion legs (5) which are connected to each other by at least one expandable connector (24) such that the expansion legs (5) can be moved away from each other when the expansion element is inserted,
wherein a free space (25) adjacent to the connector (24) is formed on the connector (24), wherein a penetration (10) arranged in the longitudinal direction between two connectors (6, 9) is filled with the material of the second dowel sleeve (3), **characterized in that** the material of the second dowel sleeve (3) with which the penetration (10) is filled forms an expansion leg (13) of the second dowel sleeve (3).

2. The expansion anchor according to claim 1, **characterized in that** the free space (25) is limited in the longitudinal direction by the connector (24).

3. The expansion anchor according to any preceding claim,
**characterized in that** the free space (25) is free of material of the second dowel sleeve (3).

4. The expansion anchor according to any preceding claim,
**characterized in that** at least two connectors (6, 8) are arranged one behind the other in the longitudinal direction, such that a free space (11) is formed at least between the first connector (6) and the second connector (8).

5. The expansion anchor according to claim 4, **characterized in that** at least three connectors (6, 8, 9) are arranged one behind the other in the longitudinal direction, such that the free space (7) is formed at least between the first connector (6) and the second connector (8).

6. The expansion anchor according to any preceding claim,
**characterized in that** a free space (11, 26) is arranged on the side of each connector (6, 9) facing away from the penetration (10).

7. The expansion anchor according to any preceding claim,
**characterized in that** a free space (7, 12) is arranged on the side of each connector (6, 9) facing the penetration (10).

8. The expansion anchor according to any preceding claim,
**characterized in that** the expansion leg (13) has local weakened areas (14).

## Revendications

1. Cheville à expansion (1) comportant une première douille de cheville (2) et une seconde douille de cheville (3), lesquelles s'étendent ensemble autour d'un canal d'expansion (4) dans la direction longitudinale (L), dans laquelle un élément d'expansion peut être introduit dans la direction longitudinale dans le canal d'expansion (4) pour l'expansion de la cheville à expansion (1),
dans laquelle la première douille de cheville (2) entoure au moins partiellement la seconde douille de cheville (3),
et dans laquelle la première douille de cheville (2) présente au moins deux branches d'expansion (5) qui sont reliées entre elles par au moins un connecteur (24) pouvant être élargi de telle sorte que les branches d'expansion (5) peuvent être éloignées l'une de l'autre lors de l'introduction de l'élément d'expansion,
dans laquelle un espace libre (25) adjacent au connecteur (24) est formé sur le connecteur (24), dans laquelle une pénétration (10) disposée dans la direction longitudinale entre deux connecteurs (6, 9) est remplie avec le matériau de la seconde douille de cheville (3), **caractérisée en ce que** le matériau de la seconde douille de cheville (3), matériau avec lequel la pénétration (10) est remplie, forme une branche d'expansion (13) de la seconde douille de cheville (3).

2. Cheville à expansion selon la revendication 1, **caractérisée en ce que** l'espace libre (25) est limité par le connecteur (24) dans la direction longitudinale.

3. Cheville à expansion selon l'une des revendications précédentes,
**caractérisée en ce que** l'espace libre (25) est exempt de matériau de la seconde douille de cheville (3).

4. Cheville à expansion selon l'une des revendications précédentes,
**caractérisée en ce qu'**au moins deux connecteurs (6, 8) sont disposés l'un derrière l'autre dans la direction longitudinale, de telle sorte qu'un espace libre (11) est formé au moins entre le premier connecteur (6) et le deuxième connecteur (8).

5. Cheville à expansion selon la revendication 4, **caractérisée en ce qu'**au moins trois connecteurs (6, 8, 9) sont disposés les uns derrière les autres dans la direction longitudinale, de telle sorte que le premier espace libre (7) est formé au moins entre le premier connecteur (6) et le deuxième connecteur (8).

6. Cheville à expansion selon l'une des revendications précédentes,
**caractérisée en ce qu'**un espace libre (11, 26) est disposé sur le côté de chaque connecteur (6, 9), lequel côté est opposé à la pénétration (10).

7. Cheville à expansion selon l'une des revendications précédentes,
**caractérisée en ce qu'**un espace libre (7, 12) est disposé sur le côté de chaque connecteur (6, 9), lequel côté est orienté vers la pénétration (10).

8. Cheville à expansion selon l'une des revendications précédentes,
**caractérisée en ce que** la branche d'expansion (13) présente des affaiblissements (14) locaux.
